# FASCICULE DE BREVET EUROPEEN

(11) **EP 2 135 799 B1**
(45) Date de publication et mention de la délivrance du brevet: **29.12.2010**
(21) Numéro de dépôt: 09159970.4
(22) Date de dépôt: 12.05.2009
(51) Int. Cl.: B62D 25/24

(54) **Partie structurelle de véhicule automobile munie d'orifices d'écoulement de peinture**
Strukturteil eines Kraftfahrzeugs, das mit Öffnungen zum Lackablauf ausgestattet ist
Structural part of an automobile equipped with paint flow-through openings

(30) Priorité: 19.06.2008 FR 0854045
(43) Date de publication de la demande: 23.12.2009
(73) Titulaire: Peugeot Citroën Automobiles SA, 78140 Vélizy Villacoublay (FR)
(72) Inventeur: Massoutier, Pascal, 78780 Maurecourt (FR); Viennois, Fabien, 92800 Puteaux (FR)
(74) Mandataire: Allain, Laurent

(56) Documents cités:
- WO-A-02/088007
- US-A- 4 700 981
- US-A1- 2005 055 803
- US-A1- 2007 063 547
- US-A1- 2007 158 355

## Description

La présente invention concerne une partie structurelle de véhicule automobile, du type comprenant :
- au moins un orifice asymétrique d'écoulement de peinture ; et
- un obturateur rapporté, propre à couvrir l'orifice asymétrique et à réaliser une obturation de l'orifice, l'obturateur comprenant des moyens de fixation de l'obturateur sur l'orifice, et des moyens de positionnement de l'obturateur par rapport à l'orifice. Un tel obturateur est connu de US-A-4,700,981.

On connaît des obturateurs, réalisés par poinçonnage et pliage d'un flan de tôle, dont les moyens de positionnement sont adaptés pour ne permettre qu'une unique position de fixation de l'obturateur dans l'orifice asymétrique.

L'obturateur comprend, sur ses bords latéraux, deux pattes de fixation opposées propres à coopérer avec deux bords rectilignes opposés de l'orifice, et, aux extrémités longitudinales de l'obturateur, deux pattes de positionnement opposées propres à ne permettre qu'une unique position de fixation de l'obturateur dans laquelle ce dernier obture l'orifice. En effet, l'obturateur a une géométrie adaptée à l'asymétrie de l'orifice et ne permet qu'une unique position de fixation. Les pattes de fixation et de positionnement sont formées par poinçonnage et pliage du flan de tôle constituant l'obturateur.

La fixation de l'obturateur ne pouvant être réalisée que dans une unique position par rapport à l'orifice et cette opération de montage étant réalisée "en aveugle" par l'opérateur, le temps nécessaire à l'opérateur pour positionner correctement l'obturateur en vis-à-vis de l'orifice est relativement long.

En outre, les pattes de positionnement ne garantissent pas une étanchéité totalement satisfaisante.

Un but de l'invention est de faciliter la fixation de l'obturateur dans l'orifice et d'améliorer l'étanchéité.

A cet effet, l'invention a pour objet une partie structurelle de véhicule automobile du type précité, **caractérisée en ce que** les moyens de fixation et les moyens de positionnement autorisent une pluralité de positions distinctes de fixation de l'obturateur sur l'orifice, l'obturateur étant adapté pour obturer l'orifice dans les différentes positions de fixation de l'obturateur, les différentes positions de fixation s'obtenant par rotation autour d'un axe perpendiculaire au plan général de l'orifice.

Suivant des modes particuliers de réalisation, la partie structurelle comporte en outre l'une ou plusieurs des caractéristiques suivantes, prise(s) isolément ou suivant toutes les combinaisons techniquement possibles :
- les moyens de positionnement comprennent un relief formé par l'obturateur, et, dans les différentes positions de fixation de l'obturateur, le relief fait saillie à l'intérieur de l'orifice, de préférence sur sensiblement toute une longueur associée de l'orifice, le relief étant de préférence convexe vers l'orifice;
- l'orifice est allongé et asymétrique suivant un axe, et le relief est allongé suivant ce même axe, et de préférence symétrique par rotation autour dudit axe perpendiculaire au plan général de l'orifice;
- les moyens de fixation comprennent au moins un organe d'encliquetage propre à prendre sur une face d'un bord de l'orifice et une patte associée d'appui sur l'autre face dudit bord de l'orifice ;
- les moyens de positionnement comprennent au moins deux pattes de positionnement propres à prendre appui, dans les différentes positions de fixation de l'obturateur, sur deux bords respectifs opposés de l'orifice;
- les pattes de positionnement comprennent chacune une surface de came propre à coopérer avec le bord correspondant de l'orifice et à centrer ainsi l'obturateur par rapport à l'orifice lors de son insertion dans l'orifice;
- l'obturateur est réalisé par emboutissage, poinçonnage, et pliage d'un flan de tôle ;
- l'obturateur est réalisé par injection de matière plastique, l'obturateur présentant une surface d'appui sur tout le pourtour de l'orifice, et une pluralité de dents d'encliquetage assurant la fixation de l'obturateur dans l'orifice dans les différentes positions de fixation de l'obturateur ; et
- les dents d'encliquetage comprennent deux dents longitudinales opposées aptes à centrer et à bloquer l'obturateur dans l'orifice suivant un axe longitudinal dans les différentes positions de fixation de l'obturateur, et deux dents latérales opposées aptes à centrer et à bloquer l'obturateur dans l'orifice suivant un axe transversal distinct de l'axe longitudinal, dans les différentes positions de fixation de l'obturateur.

L'invention a également pour objet un procédé de fabrication d'un véhicule automobile comprenant une partie structurelle munie d'au moins un orifice asymétrique d'écoulement de peinture, le procédé comprenant:
- une étape d'immersion de la partie structurelle dans un bain de peinture;
- une étape de retrait de la partie structurelle du bain et d'écoulement de la peinture par l'orifice; et
- une étape d'obturation de l'orifice,
la partie structurelle comprenant un obturateur rapporté, adapté pour couvrir l'orifice et réaliser une obturation de l'orifice, l'obturateur comprenant des moyens de fixation de l'obturateur sur l'orifice, et des moyens de positionnement de l'obturateur par rapport à l'orifice,
**caractérisé en ce que** les moyens de fixation et les moyens de positionnement permettent une pluralité de positions distinctes de fixation de l'obturateur sur l'orifice, l'obturateur étant adapté pour obturer l'orifice dans les différentes positions de fixation de l'obturateur, les différentes positions de fixation s'obtenant par rotation autour d'un axe perpendiculaire au plan général de l'orifice, l'étape d'obturation comprenant une étape de fixation de l'obturateur dans l'une quelconque des différentes positions de fixation.

L'invention sera mieux comprise à la lecture de la description qui va suivre, donnée uniquement à titre d'exemple et faite en se référant aux dessins annexés, sur lesquels :
- la figure 1 est une vue schématique en perspective de côté d'une partie structurelle de la caisse d'un véhicule automobile, selon l'invention ;
- la figure 2 est une vue agrandie d'un orifice asymétrique d'écoulement de peinture de la partie structurelle de la figure 1 ;
- la figure 3 est une vue schématique en perspective d'un obturateur de la partie structurelle de la figure 1, sur laquelle le contour de l'orifice de la figure 2 apparaît en pointillés ;
- la figure 4 est une vue en élévation de l'obturateur de la figure 3 positionné dans l'orifice de la figure 2 ;
- la figure 5 est une vue en section selon la ligne V-V de la figure 4 ;
- la figure 6 est une vue en section selon la ligne VI-VI de la figure 4;
- la figure 7 est une vue en section selon la ligne VII-VII de la figure 4 ;
- la figure 8 est une vue schématique de face d'un obturateur selon un autre mode de réalisation ;
- la figure 9 est une vue en section suivant la ligne IX-IX de la figure 8 ; et
- la figure 10 est une vue en section suivant la ligne X-X de la figure 8.

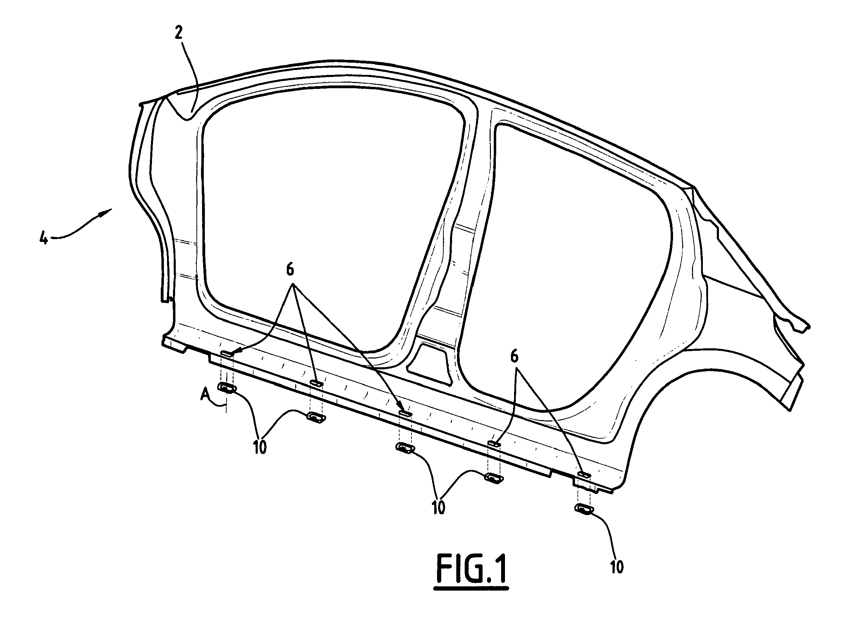

La figure 1 illustre une partie structurelle latérale 2 d'une caisse 4 de véhicule automobile (ou "côté de caisse") perforée dans un rebord horizontal de sa partie inférieure par une pluralité d'orifices 6 d'écoulement d'une peinture, de type liquide de cataphorèse.

Une fois la peinture séchée, la partie structurelle 2 est équipée d'obturateurs 10 rapportés, adaptés chacun pour être insérés de bas en haut dans un orifice 6 correspondant suivant un axe d'insertion A et réaliser ainsi une obturation étanche de l'orifice 6.

Les obturateurs 10 et les orifices 6 sont tous identiques.

Chaque orifice 6 s'étend suivant un plan général BC et définit un axe d'insertion A perpendiculaire au plan BC.

Dans tout ce qui suit, on entend par "élément symétrique", un élément qui a une symétrie par rotation autour d'un axe perpendiculaire au plan BC, c'est-à-dire parallèle à l'axe d'insertion A dans l'exemple illustré. Inversement, un élément est "asymétrique" s'il n'a pas une telle symétrie. Quand il s'agit d'une symétrie d'axe, cela est précisé.

Dans l'exemple illustré, il s'agit d'une symétrie par rotation de 180°, c'est-à-dire une symétrie centrale. Mais, en variante, il s'agit par exemple d'une symétrie par rotation de 90 °, 120 °, ou tout autre angle de rotation.

L'orifice 6 est asymétrique.

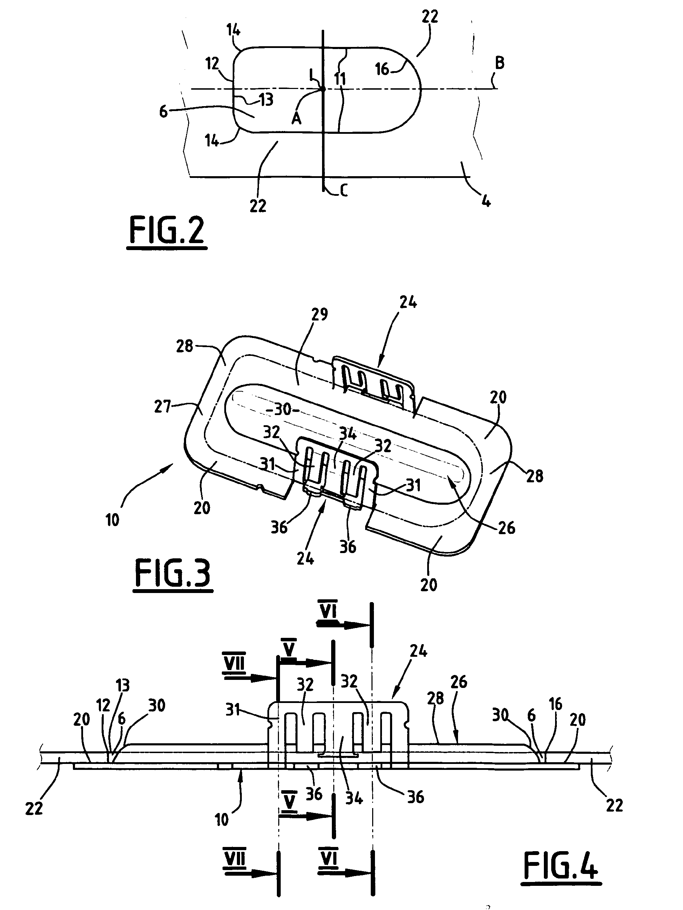

L'orifice 6 (figure 2) a un contour de forme générale allongée suivant un axe longitudinal médian B du plan BC. L'orifice 6 est symétrique par rapport à l'axe B et possède deux bords latéraux 11 rectilignes et parallèles à l'axe B. L'axe B est sécant au centre I de l'orifice avec un axe transversal médian C, perpendiculaire à l'axe B. Dans l'exemple illustré, le centre I correspond sensiblement au centre du cercle circonscrit à l'orifice 6.

En outre, l'orifice 6 comprend une extrémité longitudinale linéaire 12 possédant un bord rectiligne 13 parallèle à l'axe C et joignant les bords latéraux 11 par des coins 14 arrondis, et une extrémité opposée 16. L'extrémité 16 est de forme incurvée et ne possède pas de bord rectiligne. L'extrémité 16 est semi-circulaire entre les deux bords latéraux 11, pour une évacuation facile du liquide de cataphorèse.

Chacune des extrémités 12, 16 est symétrique par rapport à l'axe longitudinal médian B du contour de l'orifice 6. Les extrémités 12 et 16 sont asymétriques entre elles et sont à l'origine de l'asymétrie de l'orifice 6.

L'orifice 6 a un contour sensiblement constant suivant l'axe A.

L'obturateur 10 associé est réalisé par emboutissage, poinçonnage et pliage d'un flan de tôle, de préférence en acier. L'obturateur 10 est symétrique, c'est-à-dire symétrique par rotation de 180° autour de l'axe A comme expliqué ci-dessus. Il est en outre symétrique par rapport aux axes B et C.

L'obturateur 10 comprend une surface d'appui étanche 20, sensiblement plane, adaptée pour réaliser un contact étanche avec le pourtour 22 de l'orifice 6, deux languettes 24 de fixation étanche et de centrage de l'obturateur 10 suivant l'axe C, et un relief 26 de positionnement et de centrage de l'obturateur 10 par rapport à l'orifice 6 dans deux positions différentes de fixation.

L'obturateur 10 comprend une plaque 27, de forme générale allongée suivant l'axe B et de contour sensiblement rectangulaire à coins arrondis, délimitant la surface d'appui 20, et le relief 26.

La plaque 27 est symétrique par rapport aux axes B et C, de même que les languettes 24.

La plaque 27 comprend deux parties d'extrémité longitudinale 28, symétriques entre elles, qui délimitent, sur leur périphérie, la surface d'appui 20 et assurent un appui étanche sur le pourtour 22 de l'orifice 6.

La plaque 27 comprend également une zone centrale 29 joignant les deux parties d'extrémité 28, et au niveau de laquelle sont ménagées les deux languettes de fixation 24. Les bords de la zone 29 complètent la surface d'appui 20.

Comme illustré sur les figures 3 et 4, le relief 26 est formé par un bossage centré, symétrique et allongé suivant l'axe B. Le relief 26 est formé par déformation de la plaque 27, lors de l'emboutissage. Il est ainsi venu de matière avec le reste de la plaque 27.

Le relief 26 présente une surface de positionnement 30 faisant saillie par rapport à la surface d'appui 20 suivant l'axe A et pénétrant l'orifice 6, en position de fixation de l'obturateur 10. La surface 30 du relief 26 est continûment courbe et convexe vers l'orifice 6.

Grâce à sa forme allongée suivant l'axe B, le relief 26 est propre à empêcher l'insertion de l'obturateur 10 si l'orientation longitudinale de ce dernier n'est pas sensiblement parallèle à l'axe B et en regard de l'orifice 6.

En outre, le relief 26 est propre à centrer l'obturateur 10 dans l'orifice 6 suivant l'axe B. A cet effet, le relief 26 s'étend sur sensiblement toute la longueur de l'orifice 6.

La longueur du relief 26 est sensiblement égale à la longueur maximale de l'orifice 6 mesurée suivant l'axe B. Elle est par exemple comprise entre 20 mm et 45 mm. La largeur du relief 26 est sensiblement inférieure à la largeur de l'orifice 6, par exemple égale à la moitié, de façon à limiter la quantité de matière nécessaire.

Le rôle de centrage suivant l'axe C est joué par les languettes 24. Les languettes 24 sont ainsi disposées de part et d'autre de l'axe B et adaptées pour coopérer avec les bords latéraux 11 de l'orifice 6.

Les languettes 24 sont positionnées sensiblement au milieu de la longueur de la plaque 27, et sont réalisées par poinçonnage et pliage du flan de tôle formant l'obturateur 10. Elles font saillie par rapport à la plaque 27 suivant l'axe A et assurent un contact étanche avec le pourtour 22 de l'orifice 6, en continuité avec la surface d'appui 20.

Les languettes 24 sont symétriques entre elles.

Chaque languette 24 comprend un demi-cadre périphérique 31 (figures 2 et 3) en forme de U inversé, venu de matière avec la plaque 27 et relié à celle-ci aux extrémités du U. Le demi-cadre 31 fait saillie vers l'intérieur de l'orifice 6 par rapport à la plaque 27.

En outre, chaque languette 24 comprend deux doigts d'encliquetage 32, symétriques entre eux par rapport à l'axe C, et, entre ces deux doigts, une patte de positionnement et de centrage 34 suivant l'axe C, symétrique par rapport à l'axe C.

Les doigts 32 et la patte 34 sont venus de matière avec le demi-cadre 31 et font saillie à partir de la base du U du demi-cadre 31 vers la plaque 27.

Le demi-cadre 31, les doigts 32 et la patte 34 sont, comme illustré sur les figures 2 à 7, orientés sensiblement suivant un plan parallèle au plan AB, légèrement inclinés vers le centre de l'orifice 6 de façon à faciliter leur insertion dans l'orifice 6.

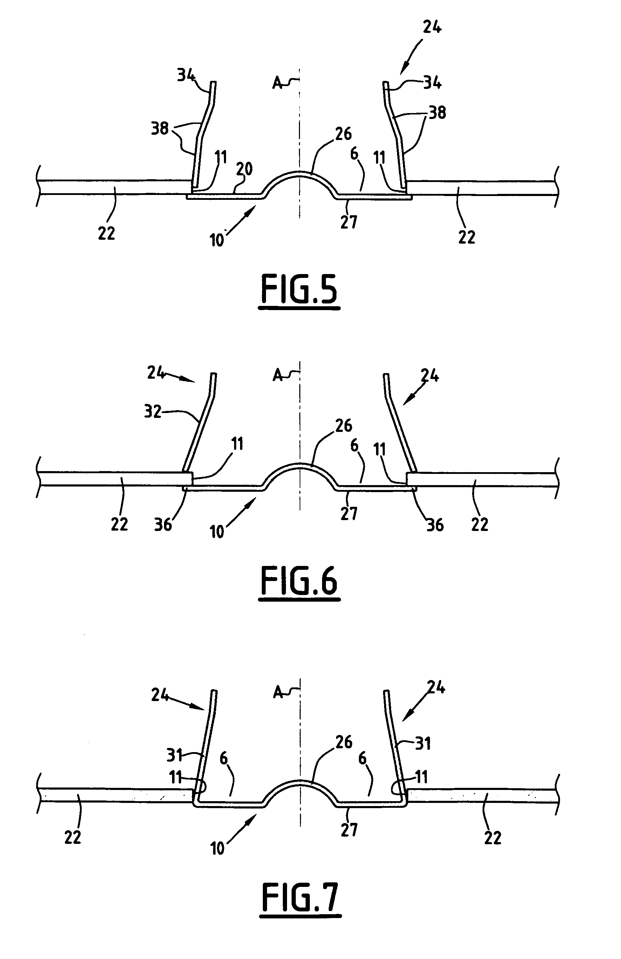

Les doigts d'encliquetage 32 (figure 6) sont déformables élastiquement lors de l'insertion de l'obturateur 10. Chaque doigt 32 est adapté pour prendre appui sur une face d'un bord de l'orifice 6 et coopère avec une patte d'appui étanche 36 sur l'autre face du même bord pour fixer l'obturateur 10 suivant l'axe A. Les deux pattes d'appui 36 prolongent la plaque 27, sensiblement suivant un plan parallèle au plan BC, en regard des doigts 32.

La patte de positionnement et de centrage 34 suivant l'axe C (figure 5) présente une surface de came 38, inclinée par rapport au plan AB, et propre à coopérer avec le bord correspondant 11 de l'orifice 6 pour déplacer l'obturateur 10 vers le centre de l'orifice 6 lors de son insertion. Comme illustré sur la figure 5, l'extrémité libre des pattes de positionnement 34 est, en position de fixation dans l'orifice, en appui sur le contour interne de l'orifice 6 de manière à assurer le positionnement de l'obturateur suivant l'axe C. Il en est de même pour le demi-cadre 31, lui-même en appui étanche sur le même contour 11 de l'orifice 6 (figure 7).

Ainsi, l'obturateur 10 est symétrique par rotation autour de l'axe d'insertion A, contrairement à l'orifice 6, et peut être fixé sur l'orifice 6 dans plusieurs positions différentes. Dans l'exemple illustré, il s'agit de deux positions s'obtenant par rotation de 180° autour de l'axe d'insertion A. De cette manière, la pose de l'obturateur 10 par un opérateur se trouve facilitée.

Il est à noter que, quelle que soit la position de fixation de l'obturateur, la plaque 27 et les languettes 24 assureront l'étanchéité de l'obturation. En effet, le relief 26 permet d'assurer la continuité de la surface d'appui étanche 20 dans les zones d'extrémité longitudinales de l'obturateur, contrairement à des pattes de positionnement réalisées par poinçonnage et pliage, qui ne peuvent fournir un appui étanche sur un bord non rectiligne de l'orifice tel que le bord semi-circulaire 16. Le risque d'erreur de positionnement est faible et la fixation de l'obturateur dans l'orifice est facile à réaliser.

La symétrie de l'obturateur 10 facilite en outre sa fabrication.

En outre, le relief 26 est simple de fabrication, nécessite peu de matière dans le flan de tôle, et induit un coût d'emboutissage faible. Le relief 26 est également robuste, un choc éventuel avec le relief 26 n'ayant que peu d'incidence sur sa géométrie, contrairement à une patte pliée.

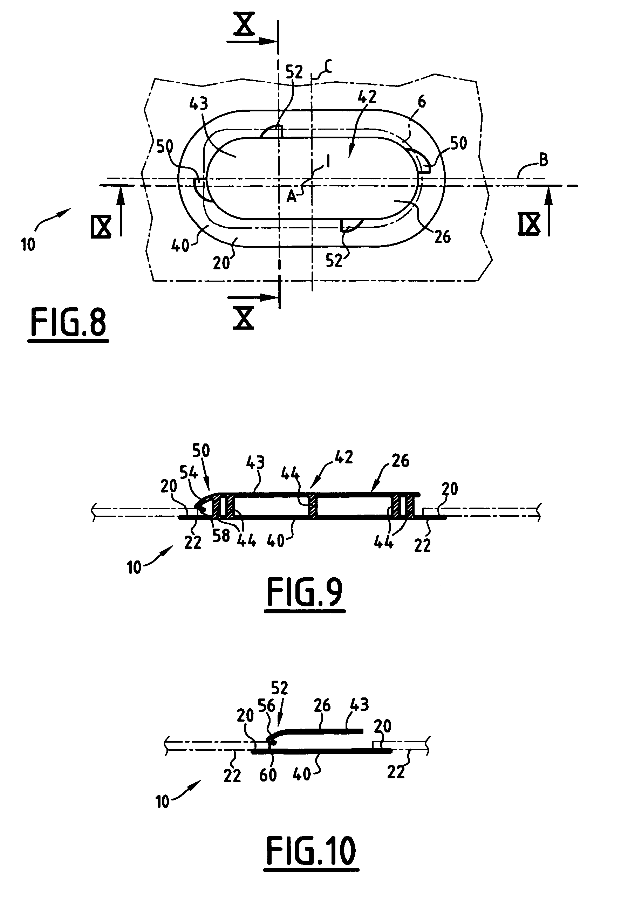

Les figures 8 à 10 illustrent une variante de réalisation dans laquelle seules les différences par rapport au premier mode de réalisation, sont décrites ci-dessous, et dans lesquelles les numéros de référence identiques font référence à des éléments analogues.

L'obturateur 10 est réalisé en une seule pièce par injection de matière plastique.

La surface d'appui 20 et le relief 26 ne sont plus formés par une unique plaque 27 mais par respectivement une plaque d'appui 40 et une tête de positionnement 42 dans l'orifice 6. Les languettes 24 sont remplacées par des dents d'encliquetage 50, 52 à section en V prévues sur le pourtour de la tête 42.

La plaque d'appui 40 présente une surface d'appui 20 apte à prendre appui de façon étanche sur le pourtour 22 sur toute la circonférence de l'orifice 6. La surface d'appui 20 est continue sur tout le pourtour 22. La surface 20 est symétrique.

La tête de positionnement 42 est également symétrique. Sa longueur est la même que celle du relief 26 du premier mode de réalisation. En revanche, sa largeur est sensiblement égale à la largeur de l'orifice 6, mesurée suivant l'axe C.

La tête 42 comprend une plaque distale 43 et des ponts de matière 44 reliant la plaque 43 à la plaque d'appui 40.

Les plaques 40 et 43 sont parallèles entre elles. Les ponts de matière 44 s'étendent sur toute la largeur de la plaque 43.

Les dents 50, 52 comprennent deux dents longitudinales 50 et deux dents latérales 52.

Les dents longitudinales 50 font saillie le long de l'axe B par rapport à la tête 42, et les dents latérales 52 font saillie par rapport à la tête 42 le long de l'axe C, c'est-à-dire latéralement. Les dents 50 sont symétriques entre elles, de même que les dents 52 entre elles.

Les dents 50, 52 présentent, du côté opposé à la plaque 40, une surface de came 54, 56 respective. Les surfaces de came 54 des dents longitudinales 50 assurent le centrage de l'obturateur 10 selon l'axe B, et les surfaces de came 56 des dents latérales 52 assurent le centrage de l'obturateur selon l'axe C.

Les dents 50, 52 sont en outre élastiques. Les dents 50, 52 sont ainsi aptes à s'encliqueter, à prendre appui sur une face d'un bord de l'orifice 6, et à coopérer avec la surface d'appui 20 pour fixer l'obturateur suivant l'axe A.

Les dents 50, 52 présentent également une surface respective de blocage 58, 60 tournée vers la plaque 40. Les surfaces 58 des dents 50 appuient sur le pourtour 22 de l'orifice 6 et bloquent l'obturateur 10 dans sa position de fixation le long de l'axe B, c'est-à-dire dans la direction longitudinale de l'orifice 6, et les surfaces 60 des dents 52 bloquent l'obturateur 10 le long de l'axe C, c'est-à-dire dans la direction latérale de l'orifice 6. L'inclinaison des surfaces 58 et 60 par rapport au plan BC est adaptée pour assurer le blocage en translation de l'obturateur suivant l'axe A.

L'obturateur 10 selon cette variante de réalisation assure une très bonne étanchéité, et ce dans ses deux positions de fixation tournées de 180° l'une par rapport à l'autre.

Il est en outre relativement facile à fabriquer et de coût de revient relativement faible lorsqu'il est produit en quantité importante.

## Revendications

1. Partie structurelle (2) de véhicule automobile, du type comprenant:
- au moins un orifice asymétrique (6) d'écoulement de peinture ; et
- un obturateur (10) rapporté, propre à couvrir l'orifice asymétrique (6) et à réaliser une obturation de l'orifice (6), l'obturateur (10) comprenant des moyens de fixation (24) de l'obturateur (10) sur l'orifice (6), et des moyens de positionnement (24, 26) de l'obturateur (10) par rapport à l'orifice (6),
**caractérisée en ce que** les moyens de fixation (24) et les moyens de positionnement (24, 26) autorisent une pluralité de positions distinctes de fixation de l'obturateur (10) sur l'orifice (6), l'obturateur (10) étant adapté pour obturer l'orifice (6) dans les différentes positions de fixation de l'obturateur (10), les différentes positions de fixation s'obtenant par rotation autour d'un axe perpendiculaire au plan général (BC) de l'orifice (6).

2. Partie structurelle (2) selon la revendication 1, **caractérisée en ce que** les moyens de positionnement comprennent un relief (26) formé par l'obturateur (10), et **en ce que**, dans les différentes positions de fixation de l'obturateur (10), le relief (26) fait saillie à l'intérieur de l'orifice (6), de préférence sur sensiblement toute une longueur associée de l'orifice (6), le relief (26) étant de préférence convexe vers l'orifice (6).

3. Partie structurelle (2) selon la revendication 2, **caractérisée en ce que** l'orifice (6) est allongé et asymétrique suivant un axe (B), et **en ce que** le relief (26) est allongé suivant ce même axe (B), et de préférence symétrique par rotation autour dudit axe perpendiculaire (A) au plan général (BC) de l'orifice (6).

4. Partie structurelle selon l'une quelconque des revendications précédentes, **caractérisée en ce que** les moyens de fixation (24) comprennent au moins un organe d'encliquetage (32) propre à prendre appui sur une face d'un bord de l'orifice (6) et une patte associée d'appui (36) sur l'autre face dudit bord de l'orifice (6).

5. Partie structurelle selon l'une quelconque des revendications précédentes, **caractérisée en ce que** les moyens de positionnement (24, 26) comprennent au moins deux pattes de positionnement (32) propres à prendre appui, dans les différentes positions de fixation de l'obturateur (10), sur deux bords respectifs opposés (11) de l'orifice (6).

6. Partie structurelle selon la revendication 5, **caractérisée en ce que** les pattes de positionnement (32) comprennent chacune une surface de came (38) propre à coopérer avec le bord correspondant (11) de l'orifice (6) et à centrer ainsi l'obturateur (10) par rapport à l'orifice (6) lors de son insertion dans l'orifice (6).

7. Partie structurelle selon l'une quelconque des revendications précédentes, **caractérisée en ce que** l'obturateur (10) est réalisé par emboutissage, poinçonnage, et pliage d'un flan de tôle.

8. Partie structurelle selon l'une quelconque des revendications 1 à 6, **caractérisée en ce que** l'obturateur (10) est réalisé par injection de matière plastique, l'obturateur (10) présentant une surface d'appui (20) sur tout le pourtour (22) de l'orifice (6) et une pluralité de dents d'encliquetage (50, 52) assurant la fixation de l'obturateur (10) dans l'orifice (6) dans les différentes positions de fixation de l'obturateur (6).

9. Partie structurelle selon la revendication 8, **caractérisée en ce que** les dents d'encliquetage (50, 52) comprennent deux dents longitudinales (50) opposées aptes à centrer et à bloquer l'obturateur (10) dans l'orifice (6) suivant un axe longitudinal (B) dans les différentes positions de fixation de l'obturateur (10), et deux dents latérales (52) opposées aptes à centrer et à bloquer l'obturateur (10) dans l'orifice (6) suivant un axe transversal (C) distinct de l'axe longitudinal (B), dans les différentes positions de fixation de l'obturateur (10).

10. Procédé de fabrication d'un véhicule automobile comprenant une partie structurelle (2) munie d'au moins un orifice asymétrique (6) d'écoulement de peinture, le procédé comprenant:
- une étape d'immersion de la partie structurelle (2) dans un bain de peinture;
- une étape de retrait de la partie structurelle (2) du bain et d'écoulement de la peinture par l'orifice (6) ; et
- une étape d'obturation de l'orifice (6),
la partie structurelle (2) comprenant un obturateur (10) rapporté, adapté pour couvrir l'orifice (6) et réaliser une obturation de l'orifice (6), l'obturateur (10) comprenant des moyens de fixation (24) de l'obturateur (10) sur l'orifice (6), et des moyens de positionnement de l'obturateur (10) par rapport à l'orifice (6),
**caractérisé en ce que** les moyens de fixation et les moyens de positionnement permettent une pluralité de positions distinctes de fixation de l'obturateur (10) sur l'orifice (6), l'obturateur (10) étant adapté pour obturer l'orifice (6) dans les différentes positions de fixation de l'obturateur (10), les différentes positions de fixation s'obtenant par rotation autour d'un axe perpendiculaire (A) au plan général (BC) de l'orifice (6),
l'étape d'obturation comprenant une étape de fixation de l'obturateur (10) dans l'une quelconque des différentes positions de fixation.

## Claims

1. Structural part (2) of a motor vehicle, of the type comprising:
- at least one asymmetric paint flow orifice (6); and
- an attached stopper (10), able to cover the asymmetric orifice (6) and to close off the orifice (6), the stopper (10) comprising means (24) for fixing the stopper (10) to the orifice (6) and means (24, 26) for positioning the stopper (10) in relation to the orifice (6),
**characterised in that** the fixing means (24) and the positioning means (24, 26) allow a plurality of different positions for fixing the stopper (10) to the orifice (6), the stopper (10) being able to close off the orifice (6) in the different fixing positions of the stopper (10), the different fixing positions being obtained by rotation about an axis that is perpendicular to the general plane (BC) of the orifice (6).

2. Structural part (2) according to claim 1, **characterised in that** the positioning means comprise a relief (26) formed by the stopper (10), and **in that**, in the different fixing positions of the stopper (10), the relief (26) protrudes into the orifice (6), preferably over substantially an entire associated length of the orifice (6), the relief (26) being preferably convex towards the orifice (6).

3. Structural part (2) according to claim 2, **characterised in that** the orifice (6) is elongated and asymmetrical along an axis (B), and **in that** the relief (26) is elongated along this same axis (B) and is preferably symmetrical by rotation about said axis (A) that is perpendicular to the general plane (BC) of the orifice (6).

4. Structural part according to any one of the preceding claims, **characterised in that** the fixing means (24) comprise at least one snap-fastening member (32) able to bear against one face of an edge of the orifice (6) and an associated tab (36) for bearing against the other face of said edge of the orifice (6).

5. Structural part according to any one of the preceding claims, **characterised in that** the positioning means (24, 26) comprise at least two positioning tabs (32) which are able to bear, in the different fixing positions of the stopper (10), against two respective opposite edges (11) of the orifice (6).

6. Structural part according to claim 5, **characterised in that** the positioning tabs (32) each comprise a cam surface (38) able to cooperate with the corresponding edge (11) of the orifice (6) and thus to centre the stopper (10) in relation to the orifice (6) during the insertion thereof into the orifice (6).

7. Structural part according to any one of the preceding claims, **characterised in that** the stopper (10) is produced by stamping, punching and folding a sheet metal blank.

8. Structural part according to any one of claims 1 to 6, **characterised in that** the stopper (10) is produced by plastic injection moulding, the stopper (10) having a bearing surface (20) for bearing against the entire perimeter (22) of the orifice (6) and a plurality of snap-fastening teeth (50, 52) which fix the stopper (10) in the orifice (6) in the different fixing positions of the stopper (6).

9. Structural part according to claim 8, **characterised in that** the snap-fastening teeth (50, 52) comprise two opposite longitudinal teeth (50) able to centre and to lock the stopper (10) in the orifice (6) along a longitudinal axis (B) in the different fixing positions of the stopper (10), and two opposite lateral teeth (52) able to centre and to lock the stopper (10) in the orifice (6) along a transverse axis (C), different from the longitudinal axis (B), in the different fixing positions of the stopper (10).

10. Method of manufacturing a motor vehicle comprising a structural part (2) provided with at least one asymmetric paint flow orifice (6), the method comprising:
- a step of immersing the structural part (2) in a bath of paint;
- a step of removing the structural part (2) from the bath and allowing the paint to flow off through the orifice (6); and
- a step of closing off the orifice (6),
the structural part (2) comprising an attached stopper (10), able to cover the orifice (6) and to close off the orifice (6), the stopper (10) comprising means (24) for fixing the stopper (10) to the orifice (6) and means for positioning the stopper (10) in relation to the orifice (6),
**characterised in that** the fixing means and the positioning means allow a plurality of different positions for fixing the stopper (10) to the orifice (6), the stopper (10) being able to close off the orifice (6) in the different fixing positions of the stopper (10), the different fixing positions being obtained by rotation about an axis (A) that is perpendicular to the general plane (BC) of the orifice (6),
the closing-off step comprising a step of fixing the stopper (10) in any one of the different fixing positions.

## Patentansprüche

1. Strukturteil (2) eines Kraftfahrzeugs der Art, die Folgendes umfasst:
- zumindest eine asymmetrische Öffnung (6) zum Abfließen von Lack und
- ein angebrachtes Verschlussstück (10), das dazu geeignet ist, die asymmetrische Öffnung (6) abzudecken und einen Verschluss der Öffnung (6) zu bewirken, wobei das Verschlussstück (10) Mittel zur Fixierung (24) des Verschlussstückes (10) auf der Öffnung (6) sowie Mittel zur Positionierung (24, 26) des Verschlussstückes (10) in Bezug auf die Öffnung (6) umfasst,
**dadurch gekennzeichnet, dass** die Mittel zur Fixierung (24) und die Mittel zur Positionierung (24, 26) mehrere verschiedene Fixierungspositionen des Verschlussstückes (10) auf der Öffnung (6) ermöglichen, wobei das Verschlussstück (10) so eingerichtet wird, dass es die Öffnung (6) in den verschiedenen Fixierungspositionen des Verschlussstückes (10) abdeckt, wobei die verschiedenen Fixierungspositionen durch Drehung um eine Achse erhalten werden, die senkrecht zur allgemeinen Ebene (BC) der Öffnung (6) verläuft.

2. Strukturteil (2) nach Anspruch 1, **dadurch gekennzeichnet, dass** die Mittel zur Positionierung ein Relief (26) umfassen, das von dem Verschlussstück (10) gebildet wird, und dass das Relief (26) in den verschiedenen Fixierungspositionen des Verschlussstückes (10) in das Innere der Öffnung (6) vorzugsweise im Wesentlichen über eine gesamte zugehörige Länge der Öffnung (6) hervorsteht, wobei das Relief (26) vorzugsweise zur Öffnung (6) hin konvex ist.

3. Strukturteil (2) nach Anspruch 2, **dadurch gekennzeichnet, dass** die Öffnung (6) gemäß einer Achse (B) langgestreckt und asymmetrisch ist und dass das Relief (26) gemäß derselben Achse (B) langgestreckt ist und vorzugsweise durch Drehung um die besagte Achse (A), die senkrecht zur allgemeinen Ebene (BC) der Öffnung (6) verläuft, symmetrisch ist.

4. Strukturteil nach einem der vorhergehenden Ansprüche, **dadurch gekennzeichnet, dass** die Mittel zur Fixierung (24) zumindest ein Rastorgan (32), das dazu geeignet ist, auf einer Fläche eines Randes der Öffnung (6) aufzuliegen, sowie eine zugehörige Auflagelasche (36) auf der anderen Fläche des besagten Randes der Öffnung (6) umfassen.

5. Strukturteil nach einem der vorhergehenden Ansprüche, **dadurch gekennzeichnet, dass** die Mittel zur Positionierung (24, 26) zumindest zwei Positionierungslaschen (32) umfassen, die dazu geeignet sind, in den verschiedenen Fixierungspositionen des Verschlussstückes (10) auf den beiden jeweils gegenüber liegenden Rändern (11) der Öffnung (6) aufzuliegen.

6. Strukturteil nach Anspruch 5, **dadurch gekennzeichnet, dass** die Positionierungslaschen (32) jeweils eine Nockenfläche (38) umfassen, die dazu geeignet ist, mit dem entsprechenden Rand (11) der Öffnung (6) zusammenzuwirken und das Verschlussstück (10) so bei dessen Einführung in die Öffnung (6) in Bezug auf die Öffnung (6) zu zentrieren.

7. Strukturteil nach einem der vorhergehenden Ansprüche, **dadurch gekennzeichnet, dass** das Verschlussstück (10) durch Tiefziehen, Stanzen und Biegen einer Blechscheibe hergestellt wird.

8. Strukturteil nach einem der Ansprüche 1 bis 6, **dadurch gekennzeichnet, dass** das Verschlussstück (10) durch Kunststoffspritzguss hergestellt wird, wobei das Verschlussstück (10) eine Auflagefläche (20) auf dem gesamten Umfang (22) der Öffnung (6) sowie mehrere Rastzähne (50, 52) aufweist, die die Fixierung des Verschlussstückes (10) auf der Öffnung (6) in den verschiedenen Fixierungspositionen des Verschlussstückes (10) sicherstellen.

9. Strukturteil nach Anspruch 8, **dadurch gekennzeichnet, dass** die Rastzähne (50, 52) zwei gegenüber liegende längliche Zähne (50), die dazu geeignet sind, das Verschlussstück (10) in der Öffnung (6) gemäß einer Längsachse (B) in den verschiedenen Fixierungspositionen des Verschlussstückes (10) zu zentrieren und zu blockieren, sowie zwei gegenüber liegende seitliche Zähne (52) umfassen, die dazu geeignet sind, das Verschlussstück (10) in der Öffnung (6) gemäß einer Querachse (C), die sich von der Längsachse (B) unterscheidet, in den verschiedenen Fixierungspositionen des Verschlussstückes (10) zu zentrieren und zu blockieren.

10. Verfahren zur Fertigung eines Kraftfahrzeugs, das ein Strukturteil (2) umfasst, das mit zumindest einer asymmetrischen Öffnung (6) zum Abfließen von Lack versehen ist, wobei das Verfahren Folgendes umfasst:
- einen Schritt des Eintauchens des Strukturteils (2) in ein Lackierbad;
- einen Schritt des Herausziehens des Strukturteils (2) aus dem Bad und des Abfließens des Lacks durch die Öffnung (6) und
- einen Schritt des Verschließens der Öffnung (6), wobei das Strukturteil (2) ein angebrachtes Verschlussstück (10) enthält, das dazu eingerichtet ist, die Öffnung (6) abzudecken und einen Verschluss der Öffnung (6) zu bewirken, wobei das Verschlussstück (10) Mittel zur Fixierung (24) des Verschlussstückes (10) auf der Öffnung (6) sowie Mittel zur Positionierung (24, 26) des Verschlussstückes (10) in Bezug auf die Öffnung (6) umfasst,
**dadurch gekennzeichnet, dass** die Mittel zur Fixierung und die Mittel zur Positionierung mehrere verschiedene Fixierungspositionen des Verschlussstückes (10) auf der Öffnung (6) ermöglichen, wobei das Verschlussstück (10) so eingerichtet wird, dass es die Öffnung (6) in den verschiedenen Fixierungspositionen des Verschlussstückes (10) abdeckt, wobei die verschiedenen Fixierungspositionen durch Drehung um eine Achse (A) erhalten werden, die senkrecht zur allgemeinen Ebene (BC) der Öffnung (6) verläuft,
wobei der Schritt des Verschließens einen Schritt des Fixierens des Verschlussstückes (10) in einer der verschiedenen Fixierungspositionen umfasst.
